Europäisches Patentamt

European Patent Office

Office européen des brevets

(19)

(11) Veröffentlichungsnummer : **0 128 447**
B1

(12)
## EUROPÄISCHE PATENTSCHRIFT

(45) Veröffentlichungstag der Patentschrift :
11.02.87

(51) Int. Cl.⁴ : **B 60 H 1/00**, G 05 D 23/19

(21) Anmeldenummer : 84106085.8

(22) Anmeldetag : 28.05.84

(54) **Steuervorrichtung für Heiz- und Klimaanlagen in Kraftfahrzeugen.**

(30) Priorität : 09.06.83 DE 3320907

(43) Veröffentlichungstag der Anmeldung :
19.12.84 Patentblatt 84/51

(45) Bekanntmachung des Hinweises auf die Patenterteilung : 11.02.87 Patentblatt 87/07

(84) Benannte Vertragsstaaten :
BE DE FR GB IT NL SE

(56) Entgegenhaltungen :
DE-A- 2 226 365
DE-A- 2 445 590
FR-A- 2 467 721
GB-A- 2 134 223
US-A- 3 110 824
US-A- 3 152 612
US-A- 4 142 553
US-A- 4 184 633
US-A- 4 340 083
US-A- 4 354 131

(73) Patentinhaber : **Siemens Aktiengesellschaft Berlin und München**
**Wittelsbacherplatz 2**
**D-8000 München 2 (DE)**

(72) Erfinder : **Hildebrand, Reinhard**
**Hauptstrasse 11**
**D-8627 Redwitz (DE)**
Erfinder : **Kusuma, Djuanarto**
**Bgm.-Prell-Strasse 17**
**D-8620 Lichtenfels (DE)**

**Beschreibung**

Die Erfindung betrifft eine Steuervorrichtung für Heiz- und Klimaanlagen in Kraftfahrzeugen, die mittels Unterdruck oder Überdruck die Klappen der Heiz- und Klimaanlage steuert mit einem mittels Dichtungen in einem Gehäuse angebrachten Schaltelement und elektrischer Kontaktierung mit Kontaktstiften. Eine derartige Steuervorrichtung ist aus der Druckschrift FR-A-2 467-721 bekannt. Weitere bekannte Schalter zur Steuerung von Klappen von Klimaanlagen bestehen aus einem zylindrischen Gehäuse mit einer Schaltstange, die mit Dichtungselementen versehen ist und deren Durchmesser kleiner ist als der Gehäusekanaldurchmesser. Die Bewegung der Schaltstange ist translatorisch und die Betätigung mechanisch (DE-A-2 445 590 und DE-C-1 495-232). Die Betätigung des Klappensteuerschalters kann auch elektromagnetisch erfolgen.

Der Erfindung liegt die Aufgabe zugrunde, das sich in einer Steuervorrichtung befindende Schaltelement direkt elektrisch zu steuern. Das Schaltelement hat die Aufgabe, das Saug- oder Druckrohr, das mit einem stets unter Unterdruck oder Überdruck stehenden Speicherbehälter angeschlossen ist, mit der Rohrleitung der mit der Klappe verbundenen Unterdruck- oder Überdruckdose zu verbinden oder zu unterbrechen. Außerdem hat das Schaltelement die Aufgabe, den Durchgang in dem stets ein atmosphärischer Druck herrscht, mit der Rohrleitung der mit der Klappe verbundenen Unterdruck- oder Überdruckdose zu verbinden oder zu unterbrechen.

Die Aufgabe wird bei einer Vorrichtung der eingangs genannten Art erfindungsgemäß dadurch gelöst, daß in dem Gehäuse ein piezoelektrischer Biegewandler angeordnet ist, der über Kontaktstifte elektrisch kontaktiert ist und daß die Betriebsspannung des piezoelektrischen Biegewandlers 12 bis 100 V beträgt. Durch die kreisförmige Öffnungs- und Schließbewegung des beidseitig mit einer Dichtung versehenen Schaltelementes, entsteht keine Reibung zwischen der Dichtung und dem Schaltergehäuse und damit auch kein Verschleiß der Dichtung. Der Stromverbrauch liegt im Bereich von µA und es ist zum Betrieb des Schaltelementes lediglich eine kleine Spannung (12 bis 100 V) erforderlich. Durch die kleine Abmessung ist der Einbau einer Vorrichtung gemäß der Erfindung auch noch in kleine Baugruppen möglich. Die Anwendung von piezoelektrischen Biegewandlern in der Fluidsteuerungstechnik ist allgemein bekannt (Siehe US-A-4 340 083), jedoch nicht bei Betriebsspannungen von 12 bis 100 V.

Der Biegewandler, der beidseitig mit Dichtungselementen versehen ist, ist in ein Kunststoffgehäuse ein- oder angelagert, daß bei der angelegten Spannung (+) der Biegewandler die Verbindung zwischen dem Saug- und Druckrohr, das mit einem stets unter Unter- oder Überdruck stehenden Speicherbehälter angeschlossen ist, der Rohrleitung und der mit der Klappe verbundenen Unter- oder Überdruckdose unterbricht. Damit hat die Rohrleitung eine Verbindung mit dem Durchgang, in dem stets atmosphärischer Druck herrscht. Bei der angelegten Spannung (—) unterbricht der piezoelektrische Biegewandler die Verbindung zwischen der Rohrleitung und dem Durchgang. Damit wird die Verbindung zwischen dem Saugrohr und der Rohrleitung hergestellt. Dies kann auch in umgekehrter Reihenfolge durchgeführt werden.

Das Kunststoffgehäuse kann aus einem Teil oder aus zwei Teilen bestehen. Bei dem zweiteiligen Gehäuse werden die Einzelteile, nachdem der piezoelektrische Biegewandler in die vorgesehene Aussparung und Zentrierung eingelegt ist, verklebt oder verschweißt. Damit ist bei einer Verbindung zwischen dem Saug- oder Druckrohr und der Rohrleitung ein dichter Verbund des Gehäuses gewährleistet.

Die elektrische Kontaktierung des Biegewandlers kann sowohl innerhalb als auch in besonders vorteilhafter Weise außerhalb des Gehäuses erfolgen durch Einklemmen des Biegewandlers in Kontaktstifte, die in einem Kontaktstiftgehäuse angebracht sind. Das Kontaktstiftgehäuse ist an das Gehäuse durch die Rasthaken eingerastet.

Bei einem einteiligen Gehäuse ist das Kontaktstiftgehäuse, das mit einer Dichtung und mit den Kontaktstiften versehen ist, in denen der Biegewandler eingeklemmt ist, um die elektrische Kontaktierung zu erzielen, mit Gießharz vergossen. Es ist durch die Rasthaken an das Gehäuse eingerastet.

Ein dichter Verschluß des Gehäuses ist bei einer Verbindung zwischen dem Saug- oder Druckrohr und der Rohrleitung durch ein Dichtungselement und das mit Gießharz eingegossene Kontaktstiftgehäuse erreicht.

Steuervorrichtungen gemäß der Erfindung können in beliebigen Steuerventilen eingesetzt werden. Besonders geeignet erwies sich ihr Einsatz als Steuervorrichtung für Heiz- und Klimaanlagen in Kraftfahrzeugen.

Zur noch besseren Veranschaulichung der Erfindung dient die Zeichnung. In dieser zeigt

Figur 1 einen Schnitt eines erfindungsgemäßen Steuerschalters mit einem Steuerschaltergehäuse aus einem einteiligen Kunststoffteil.

Figur 2 einen Schnitt eines erfindungsgemäßen Steuerschalters mit einem zweiteiligen Gehäuse aus Kunststoff.

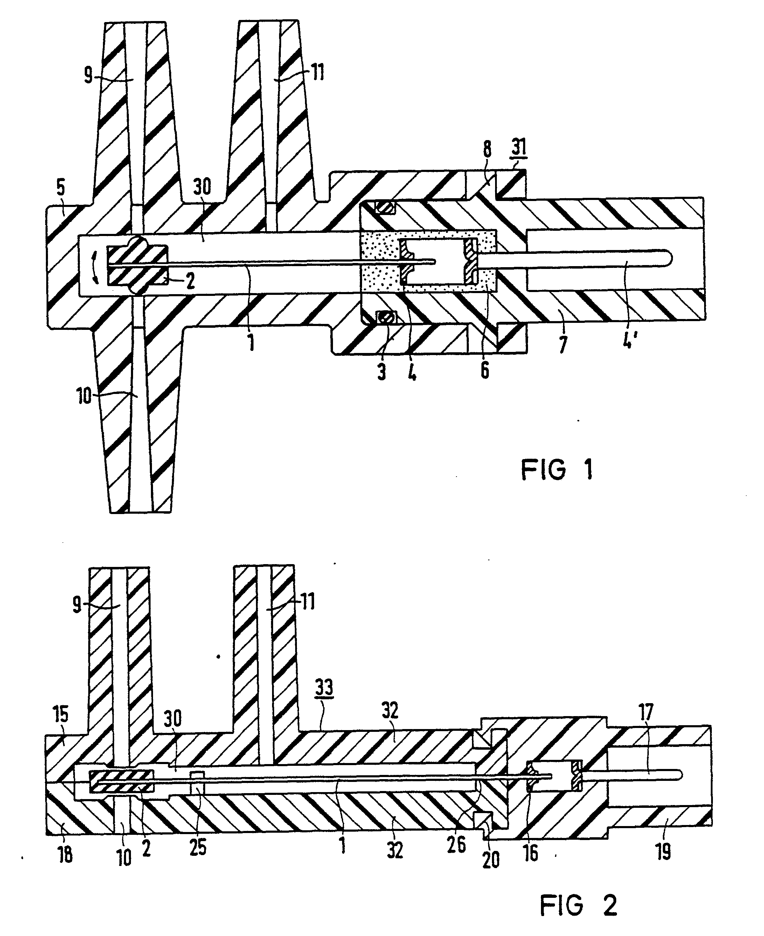

In Fig. 1 ist eine Steuervorrichtung 31 dargestellt. Das Kunststoffgehäuse 5 besteht aus einem Teil. Je nach Stellung des Biegewandlers 1 hat die Rohrleitung 11 eine Verbindung mit dem Saug- oder Druckrohr 9 oder mit dem Durchgang 10, in dem stets atmosphärischer Luftdruck herrscht. Der Biegewandler 1, der beidseitig mit dem Dichtungselement 2 versehen ist, ist im Kanal 30 des Gehäuses 5 angeordnet. Die Öffnungs- und Schließbewegung des mit dem Dichtungselement versehenen Biegewandlers ist kreisförmig. Dadurch entsteht keine Reibung zwischen der Dichtung 2 und dem Gehäuse 5 und auch kein Verschleiß der Dichtung 2.

Das Kontaktstiftgehäuse 7 ist mit dem Dichtungselement 3 und mit den Kontaktstiften 4, 4' versehen, in welche der piezoelektrische Biegewandler 1 eingeklemmt ist. Der Verguß mit Gießharz ist mit 6 bezeichnet und die Rasthaken für die Verankerung mit dem Gehäuse 5 sind mit 8 bezeichnet.

Die in Fig. 2 dargestellte Steuervorrichtung 33 hat ein zweiteiliges Gehäuse 32 aus den Einzelteilen 15 und 18. Ein Biegewandler 1 mit dem beidseitigen Dichtungselement 2 befindet sich in dem Kanal 30 des Gehäuses 32. Für ein exaktes Einlegen des Biegewandlers 1 sind die Aussparungen 26 und die Zentrierung 25 vorgesehen. Mit 10 ist der Durchgang für die atmosphärische Luft bezeichnet. Die Einzelteile 15, 18 sind verklebt oder verschweißt, wodurch eine dichte Verbindung zwischen dem Saug- oder Druckrohr 9 und der Rohrleitung 11 erreicht wird. Der Biegewandler 1 ist in die Kontaktstifte 16, 17 eingeklemmt, die in dem Kontaktstiftgehäuse 19 angebracht sind. Dieses ist an das Gehäuse 32 durch die Rasthaken 20 eingerastet.

## Patentansprüche

1. Steuervorrichtung für Heiz- und Klimaanlagen in Kraftfahrzeugen, die mittels Unterdruck oder Überdruck die Klappen der Heiz- und Klimaanlage steuert mit einem in einem Gehäuse angebrachten beidseitig mit einem Dichtungselement versehenen Biegeelement als Schaltelement und elektrischer Kontaktierung mit Kontaktstiften, dadurch gekennzeichnet, daß in dem Gehäuse (5, 32) ein piezoelektrischer Biegewandler (1) angeordnet ist, der über Kontaktstifte (4, 4') kontaktiert ist, und daß die Betriebsspannung des piezoelektrischen Biegewandlers 12 bis 100 V beträgt.

2. Steuervorrichtung nach Anspruch 1, dadurch gekennzeichnet, daß der piezoelektrische Biegewandler (1) in einem Kanal (30) des Gehäuses (5, 32) angeordnet ist.

3. Steuervorrichtung nach Anspruch 1 und 2, dadurch gekennzeichnet, daß der piezoelektrische Biegewandler (1) innerhalb des Gehäuses (5) über Kontaktstifte (4, 4') elektrisch kontaktiert ist.

4. Steuervorrichtung nach Anspruch 3, dadurch gekennzeichnet, daß die Kontaktstifte (4, 4') in einem mit Gießharz eingegossenen Kontaktstiftgehäuse (7) angeordnet sind, das über eine Dichtung (3) und Rasthaken (8) mit dem Kunststoffgehäuse (5) verbunden ist.

5. Steuervorrichtung nach Anspruch 1 und 2, dadurch gekennzeichnet, daß der piezoelektrische Biegewandler (1) außerhalb des Gehäuses (32) über in einem Kontaktstiftgehäuse angebrachte Kontaktstifte (16, 17) elektrisch kontaktiert ist.

6. Steuervorrichtung nach Anspruch 5, dadurch gekennzeichnet, daß die Kontaktstifte (16, 17) in einem Kontaktstiftgehäuse (19) angeordnet sind, das mittels Rasthaken (20) in das Gehäuse (32) einrastet.

7. Steuervorrichtung nach Anspruch 1 bis 4, dadurch gekennzeichnet, daß das Gehäuse ein einteiliges Kunststoffgehäuse (5) ist.

8. Steuervorrichtung nach Anspruch 1, 2, 5 und 6, dadurch gekennzeichnet, daß das Gehäuse ein zweiteiliges Kunststoffgehäuse (15, 18) ist.

## Claims

1. A control device for heating and air-conditioning installations in motor vehicles, which by means of underpressure or overpressure controls the flaps of the heating and air-conditioning installation, comprising as a switching element, a bending element which is fixed in a housing and is provided with a sealing element on both sides, and comprising an electric contact with contact pins, characterised in that in the housing (5, 32) there is arranged a piezo-electric bending transducer (1) which is contacted by means of contact pins (4, 4'), and that the operating voltage of the piezo-electric bending transducer is from 12 to 100 V.

2. A control device as claimed in Claim 1, characterised in that the piezo-electric bending transducer (1) is arranged in a passage (30) of the housing (5, 32).

3. A control device as claimed in Claims 1 and 2, characterised in that the piezo-electric bending transducer (1) is electrically contacted by means of contact pins (4, 4') inside the housing (5).

4. A control device as claimed in Claim 3, characterised in that the contact pins (4, 4') are arranged in a contact pin housing (7) which is cast in with casting resin and which is connected to the synthetic housing (5) by means of a seal (3) and a retaining hook (8).

5. A control device as claimed in Claims 1 and 2, characterised in that outside the housing (32) the piezo-electric bending transducer (1) is electrically contacted by means of contact pins (16, 17) which are fixed in a contact pin housing.

6. A control device as claimed in Claim 5, characterised in that the contact pins (16, 17) are arranged in a contact pin housing (19) which engages into the housing (32) by means of retaining hooks (20).

7. A control device as claimed in Claims 1 to 4, characterised in that the housing is an integral synthetic housing (5).

8. A control device as claimed in Claims 1, 2, 5 and 6, characterised in that the housing is a two-piece synthetic housing (15, 18).

## Revendications

1. Dispositif de commande pour installations de chauffage et de climatisation dans des véhicules automobiles, qui commande, au moyen d'une dépression ou d'une surpression, les clapets de l'installation de chauffage et de l'installation de climatisation, avec comme élément de commutation, un organe de flexion disposé dans un boîtier et muni sur ses deux faces d'un organe d'étanchéité, et ce moyennant l'établissement d'un contact électrique avec des broches de contact, caractérisé par le fait que dans le carter (5, 32) se trouve disposé un transducteur piézoélectrique de flexion (1), qui est contacté par l'intermédiaire de broches de contact (4, 4'), et que la tension de fonctionnement du transducteur piézoélectrique de flexion est comprise entre 12 et 100 V.

2. Dispositif de commande suivant la revendication 1, caractérisé par le fait que le transducteur piézoélectrique de flexion (1) est disposé dans un conduit (30) du boîtier (5, 32).

3. Dispositif de commande suivant les revendications 1 et 2, caractérisé par le fait que le transducteur piézoélectrique de flexion (1) est contacté électriquement, à l'intérieur du boîtier (5), par l'intermédiaire de broches de contact (4, 4').

4. Dispositif de commande suivant la revendication 3, caractérisé par le fait que les broches de contact (4, 4') sont disposées dans un boîtier (7) pour broches de contact, scellé dans une résine de coulée et qui est relié par l'intermédiaire d'une garniture d'étanchéité (3) et de crochets d'encliquetage (8), au carter en matière plastique (5).

5. Dispositif de commande suivant les revendications 1 et 2, caractérisé par le fait que le transducteur piézoélectrique de flexion (1) est contacté électriquement, à l'extérieur du boîtier (32), par l'intermédiaire de broches de contact (16, 17) disposées dans un boîtier pour broches de contact.

6. Dispositif de commande suivant la revendication 5, caractérisé par le fait que les broches de contact (16, 17) sont disposées dans un boîtier pour broches de contact (19), qui est accroché au moyen de crochets d'encliquetage (20) dans le boîtier (32).

7. Dispositif de commande suivant la revendication 1 à 4, caractérisé par le fait que le boîtier est un boîtier en matière plastique (5) d'un seul tenant.

8. Dispositif de commande suivant les revendications 1, 2, 5 et 6, caractérisé par le fait que le boîtier est un boîtier en matière plastique (15, 18) en deux éléments.

FIG 1

FIG 2